## Europäisches Patentamt

(19) **European Patent Office**

**Office européen des brevets**

(11) Publication number: **0 158 328**
**B1**

(12) **EUROPEAN PATENT SPECIFICATION**

(45) Date of publication of patent specification: **06.02.91**

(21) Application number: **85104293.7**

(22) Date of filing: **09.04.85**

(51) Int. Cl.⁵: **F 21 M 3/05**

(54) Lighting module for motor vehicle lighting system.

(30) Priority: **10.04.84 US 598615**

(43) Date of publication of application:
**16.10.85 Bulletin 85/42**

(45) Publication of the grant of the patent:
**06.02.91 Bulletin 91/06**

(84) Designated Contracting States:
**BE DE FR GB NL**

(56) References cited:
**DE-B-1 087 476**
**FR-A-2 494 812**
**FR-A-2 535 437**
**GB-A-2 045 416**
**US-A-4 336 577**

**JOURNAL OF THE ILLUMINATING
ENGINEERING SOCIETY, vol. 2, no. 1, October
1972, pages 36-42, New York, US; R.J.
DONOHUE et al.: "Computer design of
automotive lamps with faceted reflectors"**

(73) Proprietor: **GTE Products Corporation
100 West 10th Street
Wilmington, DE 19801 (US)**

(72) Inventor: **English, George J.
34 Hillside Drive
Reading, MA 01867 (US)**
Inventor: **Levin, Robert E.
40 Crescent Rd.
So. Hamilton, MA 01982 (US)**

(74) Representative: **Lemke, Jörg-Michael, Dipl.-Ing.
Oberländerstrasse 16a
D-8900 Augsburg (DE)**

## Description

### Technical field

The present invention relates in general to a new and improved lighting module for motor vehicles and to a lighting system using at least one of these modules. More particularly, the present invention relates to a lighting system constructed to provide for improved aerodyanmic performance of the motor vehicle.

### Background

Existing lighting systems used in motor vehicles, and in particular those for providing forward illumination for automobiles, have generally not been designed with aerodynamic considerations in mind. As such, existing lighting systems have exhibited poor aerodynamic performance. It has been found in accordance with the instant invention that this poor performance can be improved by firstly reducing the vertical dimension of the individual headlamps and secondly by contouring the external surface of the lighting system in cooperation with the shape of the automobile's frontal surface. The typical minimum height of headlamps found in existing lighting systems is no less than about 10 cm (four inches) (some as high as 18 cm (seven inches)), including systems having four rectangular headlamps (two per side) as part thereof. Of equal importance is the total area of the head lighting system when viewed from the front. In many existing systems, total vertical areas of about 450 to 580 cm² (about seventy to ninety square inches) are common. Understandably, such large areas for lighting systems, must contribute to poor aerodyanmic performance of the respective motor vehicles. In this regard, the following table is a list of present multiple headlamp lighting systems illustrating the approximate height and total frontal (vertical) area of each system listed.

TABLE

| System | Headlamp type | Height (inches) | Total system area (sq. inches) |
|---|---|---|---|
| Sealed beam headlamps | | | |
| 2 Lamp, round | 2D | 7 | 77 |
| 4 Lamp, round | IC/2C | 5-1/4 | 87 |
| 2 Lamp, rectangular | 2B | 5-1/2 | 83 |
| 4 Lamp, rectangular | 1A/2A | 4 | 96 |
| Replaceable capsule | | | |
| 2 Lamp, rectangular | 2E | 4 | 48 |

Another disadvantage associated with existing lighting systems, particularly those of the sealed beam type, is the necessity to stock more than one type of headlamp. Specifically, one type of headlamp may be used to provide low beam while a separate, different type of headlamp is used to provide high beam. The vehicle owner, therefore, must maintain at least two different types to assure quick replacement due to headlamp failure.

In a more recently introduced system, referred to in the above Table as Type 2E, a lamp capsule element is replaced in a fixed reflector-lens combination (i.e., through a rear opening in the reflector). However, with this sytem, there exists the potential for a tolerance control problem, in particular between the positional arrangement of the lamp's filament and the reflector.

Document DE—B—1 087 476 discloses a lighting system of the replaceable capsule type for providing forward illumination for a motor vehicle while improving aerodynamic performance. The lighting system includes a plurality of light sources, each comprising a reflector, a lamp capsule and a glass cover member. The lighting system further includes a transparent forward closure member, which, if the cover members are optically passive, is configured as a lens member for providing a predetermined pattern of light from the light sources. The light sources are not provided as replaceable modules, however. Instead, the lamp capsules may be replaced.

With existing lighting systems, such as those mentioned above, there is also the problem that when a headlamp burns out, a major portion of the forward light pattern is lost due to the inability of only the single headlamp remaining (in a two headlamp arrangement) to provide sufficient forward illumination. In a four headlamp system (two per side) a significant reduction in output on one side of the vehicle occurs. Still another problem in existing systems with separate headlamps being used for high and low beam is the inherent lack of flexibility, particularly in optimizing both high and low beam patterns. In those systems in which two filaments are employed in a single lens-reflector combination, the lens element can typically be optimized for only one pattern. Switching to the second filament results in a compromised light distribution.

### Disclosure of the invention

One object of the present invention is to provide a lighting module for use in a lighting system for a motor vehicle, and in particular, one adapted to improve the aerodynamic performance of the vehicle.

Another object of the present invention is to provide a lighting module for use in a motor vehicle lighting system in which improved aerodynamic performance is obtained by a reduction of the vertical dimension of the individual light sources (modules) utilized so that the height of the optical system is, remarkably, only about 5 cm (two inches) or less, which is less than about one-half of the minimum height of typical existing systems.

Another object of the present invention is to provide a lighting module for use in a motor vehicle lighting system in which improved aerodynamic performance is possible by virtue of the ability of the system's external contour to conform to the corresponding external shape of the automobile's front surface.

A further object of the present invention is to provide a lighting module for use in a motor vehicle lighting system in which there is a need for the vehicle's owner to stock only a single light source (module) such that this singular source satisfies the owner's replacement needs in the event of failure of any source in the system.

Still another object of the present invention is to provide a lighting module for a motor vehicle lighting system in which the module has the advantage of superior tolerance control between the filament of the capsule thereof and the module's reflector due to the ability to closely control base and socket tolerances at the time of manufacture of the module.

Another object of the present invnetion is to provide a lighting module for a motor vehicle lighting system which enables the system to possess improved optical performance, particularly upon failure of any one of the system's light sources.

A further object of the present invention is to provide a lighting module for a motor vehicle lighting system which enables the system to possess enhanced flexibility, particularly from an optical standpoint, by assuring optimal high and low beam content.

A further object of the present invention is to provide a lighting module for a motor vehicle lighting system which can be used in combination with a plurality of similar modules, all in combination with a high quality lensing system.

Still another object of the present invention is to provide a motor vehicle lighting system module which is of relatively simple construction and which can be safely and readily replaced even by a vehicle automobile owner with limited mechanical abilities.

In accordance with one aspect of the invention, there is provided a replaceable lighting module as defined in claim 1. Advantageous embodiments of the lighting module according to the invention are described in dependant claims 2—8. In accordance with a further aspect of the invention there is provided a lighting system, using at least one of the said lighting modules, as described in claims 9—12.

Brief description of the drawings

Fig. 1 schematically illustrates a motor vehicle lighting system of the present invention wherein there is shown an array of reflector-capsule modules in accordance with a preferred embodiment of the invention, said modules shown in combination with a lens member;

Fig. 2 is a cross-sectional view as taken along the line 2—2 in Fig. 1, illustrating the positional relationship between the reflector-capsule module of the invention and the lens member;

Fig. 3 is a cross-sectional view of an alternate embodiment of the invention, illustrating the lens member in a different position relative to the adjacent module;

Fig. 3A is a partial view of an alternate embodiment for mounting the capsule of the invention within the reflector thereof; and

Fig. 4 schematically represents the light control that may be provided in association with the motor vehicle lighting system of the invention.

Best mode for carrying out the invention

For a better understanding of the present invention, together with other and further objects, advantages and capabilities thereof, reference is made to the following disclosure and appended claims in connection with the above-described drawings.

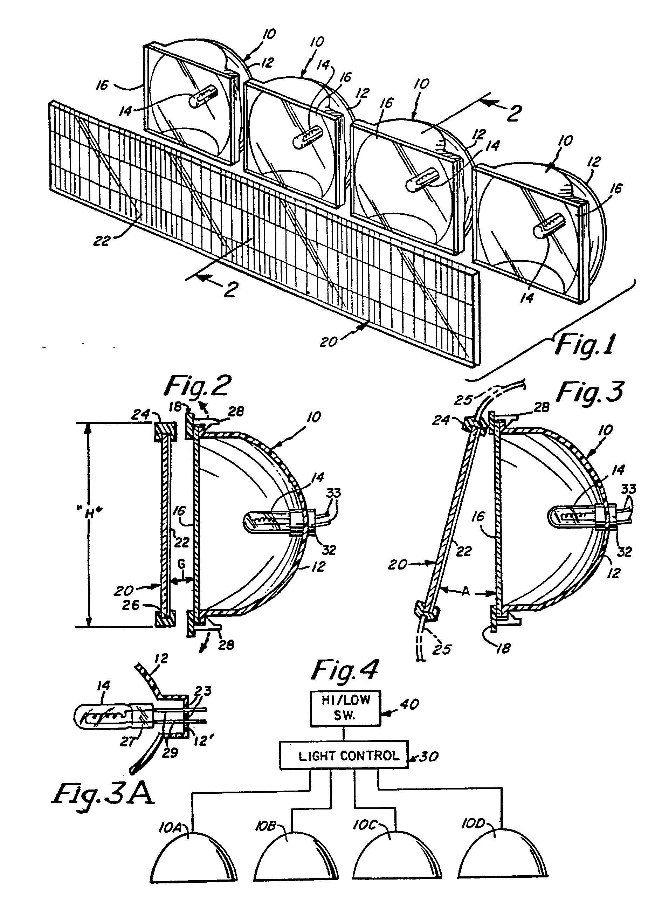

With particular attention to the drawings, Fig. 1 is an exploded perspective view, and Fig. 2 is a cross-sectional view showing the proper positional arrangement of a motor vehicle lighting system using the instant invention. As illustrated in Fig. 1, the lighting system basically comprises a plurality of replaceable, sealed reflector-capsule lighting modules 10 in accordance with a preferred embodiment of the invention, and a common lens member 20 having a lens surface 22 for directing the light emitted by the modules and passing through the lens member in a forward direction and in accordance with a pre-established pattern.

The system is thus one for providing forward illumination for a motor vehicle when suitably positioned thereon (or within). Lens surface 22 is located on an internal surface of member 20 such that the lensing elements thereof face the adjacent modules. This arrangement prevents dirt build-up on the lensing surface as might occur if these elements faced outwardly.

Fig. 2 illustrates one of the modules 10 of Fig. 1 in a cross-sectional view, said module comprising a reflector 12, a lighting capsule 14 mounted in the reflector, and a means for enclosing and sealing a forward (front) portion of the module, illustrated in Fig. 2 as an optically clear planar cover 16. The cover 16, being of glass or plastic material, is hermetically sealed along its entire perimeter to the front, open portion of reflector 12 (e.g., by means of an appropriate adhesive). Fig. 2 also shows a means 24, which may be in the form of a support bracket having a central aperture 26 therein, for retaining the lens member 20 in proper position within the motor vehicle (not shown). Fig. 2 also illustrates means 18 (a pair of opposed, releasable clamps 28) for supporting each module 10 within the vehicle. The module 10 is preferably supported in an easily releasable mounting arrangement to thus facilitate replacement by the vehicle's operator. The module 10, for example, may be withdrawn by lifting the hood of the vehicle, withdrawing both clamps (in the direction shown in Fig. 2) and removing the module from its supporting brackets, and then replacing the module with a substantially identical one. All modules 10 are similar and substitution is thus possible for any one of the four (eight in the total system) using a common replacement module.

As indicated previously, the height (dimension "H" in Fig. 2) of the optical system illustrated in Figs. 1 and 2 is only about 5 cm (two inches) or less. This contrasts with the minimum height of existing systems which is typically at least 10 cm (four inches) or more. The total width of the defined system, regardless of how the width is divided across the front of the automobile, is preferably 51 cm (twenty inches) or less, resulting in a maximum area of only about 258 cm² (forty square inches) for the entire optical system of the vehicle. In the preferred embodiment, there are two separate optical systems, one on either side of the vehicle, each having the aforedefined height of 5 cm (two inches) and a width (or length) of 25.5 cm (ten inches). This total system area of only about 258 cm² (forty square inches) is substantially less than the area of present multiple headlamp systems, such as those defined in the table above. This minimal size thus provides an added advantage in both styling and aerodynamics. It is therefore understood from the foregoing explanation that a total of eight individual modules 10 are employed per vehicle, with two sets of four each being strategically located on the vehicle (e.g., on or within opposed front fenders or as part of the grillwork). Should one module fail, therefore, total light output will not be significantly diminished.

Fig. 3 is a cross-sectional view similar to the view of Fig. 2, but showing the lens 20 in a different positional arrangement relative to the adjacent module 10. In Fig. 3, the same reference characters are thus used to identify the same parts. Therefore, in Fig. 3 there is shown the module 10 with its parabolic reflector 12 and lighting capsule 14. There is also shown the planar lens 20 which is disposed at an angle (A) which is preferably within the range of from about zero degrees (vertical) to about thirty degrees from vertical. The ability to slightly tilt the lens is deemed highly advantageous from an aerodynamic standpoint to enable the external surface of the lens to conform (match) the contour of the vehicle, said contour indicated by the dashed line (25) in Fig. 3. It is also readily possible to slightly curve the lens to conform to a similarly shaped automobile surface.

As indicated previously, the main light source for each light-emitting module 10 is a low wattage, tungsten halogen capsule 14 which is integrally mounted in a precision reflector 12. By low wattage is meant a wattage within the range of only about ten to about twenty-five watts. The capsule-reflector module 10 thus serves as a common light source that may be used with various lenses and lens combinations to produce any desired automotive lighting function. The external surface of lens 20, such as illustrated in Fig. 3, is contoured to the individual requirements of the automobile's frontal surface, or it may be a standard element suitable for use on a variety of vehicles. Because the ultimate light distribution is determined by the specific lens prescription, the standard lamp-reflector module can uniquely be used with either high or low beam patterns or even for special functions such as auxiliary driving lights, fog lights, etc.

Accordingly, a significant advantage to the system using the present invention is that a single light source type (capsule-reflector module) can be stocked to fill the replacement needs for a large variety of headlighting types. This is a key advantage over many prior sealed beam systems (e.g., four-lamp systems) in which different lamps must be stocked, such as one for high beam and one for low beam.

Mention has also been made previously of the 2E twin (two) lamp system in which a lamp capsule member can be replaced (removed from the reflector) in a fixed reflector-lens combination. However, in comparison to this system, the present invention has the advantage of superior tolerance control between the filament and reflector because the invention has an inherently larger tolerance due to base and socket tolerances. Such tolerances can understandably be closely controlled at the time of manufacture.

With particular regard once again to Fig. 1, it is noted that all of the modules 10 of the invention are substantially identical. The control of the beam pattern is thus accomplished by the lens member 10, which is designed to provide the various required optical distributions such as high and low beam patterns. In Fig. 1, a common (single element) lens member 20 is shown. However, an alternative embodiment may use separate, individual lenses which are spacedly positioned adjacent each module and separated from each other by a divider, if desired.

It is noted in Fig. 2 that the mounting of the module relative to the lens member is such that there is some gap (G) therebetween. There may be provided a reference surface (not shown) molded on the rear of the lens member and against which the respective module would be positioned. In this way, for example, the module could be properly aligned relative to the lens at the desired spacing (gap). Significantly, alignment between the lens and the lamp-reflector module is superior (more precise) to that of a replaceable headlamp (with reflector) due to the relatively large reference base surface that could be provided. It is of course understood that the several modules 10 and adjacent lens member 20 must be aligned together (e.g., mechanically) to assure optimum light emission through the lens. In addition, it is also considered important to provide some means of adjusting both lens and modules for proper alignment (e.g., in the event of vehicle tilting). Such a means could include a bubble level or the like as an integral part of lens member 20 to clearly indicate correct alignment (relative to vertical). Similar aligning means can be provided as an integral part of each capsule or as part of a common clamp-holder designed to accommodate all four modules in one assembly. Uniquely, alignment of all four can then be performed simultaneously, as can alignment of but a single lens member. Such a system should also include some means of indicating proper vehicle alignment to provide adequate comparison thereto prior to subsequent lens and/or module alignment.

Each module 10 is mechanically sealed in a hermetic manner to prevent dirt and moisture from entering the critical optical region. This mechanical seal is provided by means of the clear, planar cover 16 which is sealed at its rectangular perimeter to the reflector. Preferably, there is also some type of mechanical seal (not shown) provided between the lens 20 and the capsule-reflector module 10 to protect the rear lens surface. In addition, each of the low-wattage tungsten halogen capsules 14 which provide the light output for each module is hermetically sealed through the rear wall of the reflector component 12. This can be accomplished, as shown in Fig. 3A, by providing two relatively small apertures 23 within a protruding neck portion 12' formed as part of the reflector's rear wall and inserting each of the capsule's two conductive, metallic lead-in wires 29 (or supporting wires secured thereto, if desired) within a respective one of these apertures. Thereafter, ultrasonic welding can be employed to hermetically seal the plastic reflector material about each wire. The material for reflector 12 is plastic, preferably a polycarbonate (i.e., a plastic sold under the trademark Lexan by the General Electric Company). Another plastic suitable for the reflector is a mineral-filled nylon. The clear cover 16, which as indicated does not include any lensing elements on either side (or as part thereof), if plastic, is preferably the aforementioned Lexan polycarbonate. Sealing of the tungsten halogen capsule in the reflector is also possible by providing an insulative (e.g., plastic) base (or socket) 32 and hermetically sealing (e.g., also by ultrasonic welding) the lead-in wires of the capsule therein. This base can then be sealed (e.g., using a suitable epoxy) within an aperture in the rear of the plastic reflector in the manner shown after placing the base within said aperture. The base's conducting wires 33, connected respectively to the lead-in wires and projecting externally of the base (and thus reflector), can thus be connected to the vehicle's electrical system.

One significant feature of each reflector of the invention as utilized per module is that almost all of the contour of the reflector's internal reflecting surface is maintained. Specifically, this is relatively little "cut-off" of this contour (parabolic) at the upper and lower portions of the reflector. Thus maximum reflecting efficiency is achieved, unlike many rectangular headlamp reflectors wherein extremely large parts of the contour, both upper and lower, are removed to assure the four to seven inch maximum height requirement.

The tungsten halogen capsule itself may be one known in the light art. Typically, this comprises a quartz glass envelope having a pinch (press) sealed end 27 (Fig. 3A) through which the filament's lead-in wires 29 (e.g., nickel or molybdenum) pass. The filament, being of tungsten, is electrically connected within the capsule to each lead-in wire (or an extension thereof). The halogen cycle is known in the lighting art and further explanation is thus not deemed necessary. One example of a tungsten halogen lamp used in existing automobile headlights (i.e., sealed beam) is shown and described in U.S. Patent 4,319,156 (Beinvenue et al), the disclosure of which is thus incorporated herein by reference. It is of course understood that the capsule of the instant invention represents a substantially reduced (smaller) version of a lamp such as this, as well as being different in other ways. For example, the capsule's filament is preferably axially oriented along the reflector's optical axis to provide optimal output. Such an axial arrangement is shown in Figs. 2, 3, and 3A. Further, the capsule of the instant invention includes only one filament and not two, as in 4,319,156, thus requiring only two lead-in wires and not four as shown in said patent.

As stated, the use of multiple sources (four on each side of the automobile, as illustrated in Fig. 1) assures several advantages over present state-of-the-art systems. First, with the use of multiple sources, there is some desired redundancy in that more than one section of the system provides illumination to the same region of space with nearly identical light distribution. Thus, should one module fail (burn out), a major portion of the forward light pattern will not be completely lost as is the case with most present headlamp systems (including both two and four lamp systems). For the defined system using the instant invention, about one-half of the coverage for any given forward component remains upon the failure of a single module. Second, it is known that only certain parts of the reflector provide beam elements suitable for developing the high intensity gradients required for the sharp cut-off of the low beam pattern near the horizontal plane through the vehicle's light source (headlamp). A greater percentage of the net reflector area for developing high intensities near the horizontal with minimum glare in the upper left quadrant (toward oncoming drivers) is possible using this invention through the utilization of several, but more numerous, reflector elements. Finally, a system using an increased number of individual lighting units or modules in turn increases the flexibility of optimizing both the high and low beams. This is possible by switching (activating) selected modules for either high or low beam while leaving other modules energized for both patterns. Present headlamp systems in which two filaments are activated in a single lens-reflector headlamp unit do not typically possess such flexibility. With these existing systems, the lens elements can be optimized for only one pattern and switching to a second filament produces at best a compromised light distribution.

With the use of relatively small reflectors (those having an overall vertical height of about 5 cm (two inches) or less) and relatively low wattage light sources, it is more readily possible to produce high quality reflectors than in prior art systems. As stated above, the invention's high quality reflector is preferably constructed of plastic (a desirable feature also from a cost standpoint). In addition, the plastic lens is a preferred component in accordance with the present invention as it eliminates the previous problems (e.g., manufacturing) encountered with glass lenses used on many sealed beam headlamps. The small reflector of the instant invention, on the other hand, can be formed with superior control of contour and surface quality and in an economical manner (e.g., injection molding). This permits improvement of the light pattern in the critical regions of the beam as compared to many present systems. In addition, use of multiple lighting modules eliminates the need for two filament light sources. Such sources in prior art headlamps have the disadvantages of being optimized for only one of two light patterns, high beam or low beam. Furthermore, light scattering and the blocking of light from one filament by the other, serves to degrade ultimate performance. The relative locations of such dual filaments in a single source is not arbitrarily controllable since one filament is located according to the principle design, and the second filament is located to approximate the second, required pattern. On the other hand, the single, axially oriented filament (per module) of the present invention is always optimally located relative to the module's reflecting surfaces.

With regard to the mounting of the invention's filament, it is preferred, as stated above, that this element be axially mounted (along the reflector's optical axis). This has been found to be the preferred mounting for at least two reasons. First, this arrangement maximizes utilization of the reflector region near the horizontal plane (e.g., that region known to provide optimum control of high intensity gradients). Second, the filament image reflected off from the envelope of the lamp capsule is directed back onto the filament. Since the reflected filament image from the capsule's envelope has a luminance of approximately ten percent of the filament itself, it can strongly contribute to stray or uncontrolled light if it is not blocked by the filament. The axial filament is a preferred form of construction to assure this. In one example of the invention, a single coil (C8) tungsten filament was used. The resulting capsule produced eighteen watts during operation.

With reference to the control of beam pattern for both high and low beam, reference is made to Fig. 4 which schematically illustrates the four modules of Fig. 1. These are identified in Fig. 4 as modules 10A, 10B, 10C, and 10D. Also illustrated is the lens member 20. It is noted that the connections to each of the modules are coupled from a light control box 30 which furthermore has an input from a high-low switch 40. The light control box 30 may be of conventional design and the switch 40 is simply a two-position switch selecting either high beam or low beam. In a low beam position, the light control box 30 causes activation of only modules 10A and 10B. Alternatively, in the high beam position, switch 40 and the light control box 30 control the modules so as to provide for activation of all modules 10A, 10B, 10C, and 10D, simultaneously.

In summary, there is provided a lighting module for use with several additional, similar modules to form a forward (headlighting) illumination system for a motor vehicle, and in particular for an automobile, that is, remarkably, only 5 cm (two inches) high. The module is constructed as an integral, hermetically sealed unit for being spacedly located behind an associated lens member for controlling the forward lighting on the vehicle. The preferred system using the invention is constructed so that there are multiple sources (e.g., four) on each side of the automobile. These multiple sources are adapted for being arranged in an array having a generally rectangular shape with the larger dimension being horizontal. The lamp-reflector module, as noted above, is sealed using a planar cover and is disposed behind the lens at a slight spacing therefrom. The planar cover is clear, exclusive of lensing elements. Thus, the lens can be contoured to the frontal shape of the automobile for aerodynamic considerations. This lens may be a single lens member (per module) or as a member common to all modules on each side. The lens serves to refract light in such a manner that, for example, two modules may be used for providing low beam per side while the addition of two other modules produces a high beam.

While there have been shown and described what are at present considered the preferred embodiments of the invention, it will be obvious to those skilled in the art that various changes and modifications may be made therein without departing from the scope of the invention as defined by the appended claims.

## Claims

1. A replaceable lighting module (10) for use in a lighting system for a motor vehicle having a lens (20), said module comprising:

a reflector (12) having a forward open portion;

a tungsten halogen capsule (14) mounted within said reflector (12) and including an envelope, a filament structure located within said envelope, and a pair of lead-in wires (29) extending from said envelope; and

means for enclosing said forward open portion of said reflector, said means including a substantially clear cover member (16) hermetically sealed to said reflector (12) and not including lens elements or the

EP 0 158 328 B1

like thereon or as part thereof, said module (10) having a vertical height of only about 5 cm (two inches) or less,

said module (10) being replaceably positionable behind said lens (20) to provide forward illumination for said vehicle therethrough.

2. The lighting module (10) according to claim 1 wherein said reflector (12) and said cover member (16) are each comprised of plastic material.

3. The lighting module (10) according to claim 1 wherein said tungsten halogen capsule (14) is of about ten to twenty-five watts.

4. The lighting module (10) according to claim 1 wherein said cover member (16) is glass.

5. The lighting module (10) according to Claim 1 including a pair of apertures (23) within said rear wall of said reflector (12), each of said lead-in wires (29) of said tungsten halogen capsule (14) being positioned within a respective one of said apertures (23) and extending from the rear of said reflector (12) for being electrically coupled to a power source associated with said motor vehicle.

6. The lighting module (10) according to claim 5, wherein said lead-in wires (29) are securely positioned within said reflector (12) by ultrasonic welding.

7. The lighting module (10) according to claim 1 including an electrically insulative base member (32), said tungsten halogen capsule (14) securely positioned within said base member (32), said rear wall of said reflector (12) having an opening therein, said base member (32) positioned within said opening in a sealed manner.

8. The lighting module (10) according to claim 1 wherein said reflector (12) includes an internal reflecting surface having a substantially parabolic contour.

9. A lighting system for a motor vehicle using at least one lighting module (10) according to claim 1, including a lens member (20) for controlling the light emitted by said tungsten halogen capsule (14) through said clear cover member (16) to provide a predetermined pattern of light from said motor vehicle when said module is positioned therein.

10. The lighting system according to claim 9 wherein said lens member (20) is spacedly positioned in front of said clear cover member (16) and forms an angle with said cover member (16) within the range of from about zero degrees to about thirty degrees.

11. The lighting system according to claim 9, wherein said lens member (20) is substantially planar and includes a lensing surface on one side thereof facing said module (10).

12. The lighting system according to claim 9 wherein said lens member (20) is contoured to substantially match the forward contour of said motor vehicle.

## Patentansprüche

1. Auswechselbares Beleuchtungsmodul (10) zur Verwendung in einem eine Linse (20) aufweisenden Beleuchtungssystem eines Kraftfahrzeugs, wobei dieses Modul unfaßt:

einen Reflektor (12) mit einem nach vorne offenen Bereich;

eine Wolfram-Halogen-Kapsel (14), die innerhalb des Reflektors (12) angebracht ist und eine Hülle aufweist, wobei innerhalb der Hülle eine Glühfaden-Baugruppe angeordnet ist und sich ein Paar Zuführungsdrähte (29) von der Hülle weg erstreckt; und eine Einrichtung zum Abschließen des nach vorne offenen Bereichs des Reflektors, wobei diese Einrichtung ein im wesentlichen klar durchsichtiges Abdeckelement (16) besitzt, das an dem Reflektor (12) hermetisch angesiegelt ist und keine Linsenelemente oder dergleichen an sich oder als Teil der Einrichtung aufweist, dieses Modul (10) eine vertikale Höhe von lediglich etwa 5 cm (2 Zoll) oder weniger aufweist, und schließlich dieses Modul (10) sich auswechselbar hinter der Linse (20) anordnen läßt, um eine Vorwärtsbeleuchtung für das Fahrzeug druch diese Linse hindurch zu gewährleisten.

2. Beleuchtungsmodul (10) nach Anspruch 1, bei welchem der Reflektor (12) und das Abdeckelement (16) jeweils aus Kunststoffmaterial bestehen.

3. Beleuchtungsmodul (10) nach Anspruch 1, bei welchem die Wolfram-Halogen-Kapsel (14) etwa 10 bis 25 Watt aufweist.

4. Beleuchtungsmodul (10) nach Anspruch 1, bei welchem das Abdeckelement (16) aus Glas besteht.

5. Beleuchtungsmodul (10) nach Anspruch 1, das ein Paar Öffnungen (23) innerhalb der Rückseite des Reflektors (12) aufweist, wobei die Zuführungsdrähte (29) der Wolfram-Halogen-Kapsel (14) jeweils in einer der Öffnungen (23) angeordnet sind und sich von der Rückseite des Reflektors (12) weg erstrecken, um an der zum Kraftfahrzeug gehörenden Energiequelle elektrisch angeschlossen zu werden.

6. Beleuchtungsmodul (10) nach Anspruch 5, bei welchem die Zuführungsdrähte (29) in dem Reflektor (12) durch Ultraschallschweißung festpositioniert sind.

7. Beleuchtungsmodul (10) nach Anspruch 1, das ein elektrisch isolierendes Sockelelement (32) einschließt, wobei die Wolfram-Halogen-Kapsel (14) innerhalb des Sockelelements (32) festpositioniert ist, in der Rückwand des Reflektors (12) sich eine Öffnung befindet und das Sockelelement seinerseits in dieser Öffnung eingesiegelt positioniert ist.

8. Beleuchtungsmodul (10) nach Anspruch 1, bei welchem der Reflektor (12) eine innere Reflexionsoberfläche mit im wesentlicher parabolischer Kontur aufweist.

9. Beleuchtungssystem für ein Kraftfahrzeug unter Verwendung von zumindest einem Beleuchtungsmodul (10) nach Anspruch 1, das ein Linsenelement (20) für die Steuerung des von der Wolfram-Halogen-Kapsel (14) durch das klar durchsichtige Abdeckelement (16) ausgesandte Licht einschließt, um ein vorbestimmtes Lichtmuster aus dem Kraftfahrzeug zu gewährleisten, sobald das Modul darin eingesetzt ist.

10. Beleuchtungssystem nach Anspruch 9, bei welchem das Linsenelement (20) in Abstand vor dem klar durchsichtigen Abdeckelement (16) positioniert ist und einen Winkel mit dem Abdeckelement (16) im Bereich von etwa Null Grad bis etwa dreißig Grad aufweist.

11. Beleuchtungssystem nach Anspruch 9, bei welchem das Linsenelement (20) im wesentlichen eben ist und eine Linsenfläche an seiner einen Seite aufweist, die dem Modul (10) gegenüberliegt.

12. Beleuchtungssystem nach Anspruch 9, bei welchem das Linsenelement (20) derart kontruiert ist, daß es der vorderen Kontur des Kraftfahrzeugs im wesentlichen angepaßt ist.

**Revendications**

1. Module d'éclairage (10) remplaçable destiné à un système d'éclairage pour véhicule à moteur ayant une lentille (20), le dit module comprenent:

un réflecteur (1) ayant une partie avant ouverte;

une lampe halogène-tungstène (14) disposée à l'intérieur du dit réflecteur (12) et comportant une ampoule, une structure de filament logée dans la dite ampoule, et deux entrées de courant (29) faisant saillie de la dite ampoule; et

un moyen pour fermer la dite partie avant du dit réflecteur, ce moyen incluant un couvercle (16) sustantiellement transparent hermétiquement scellé au dit réflecteur (12) et dépourvu de tout élément lenticulaire ou équivalent, la hauteur verticale du dit module (10) étant inférieure ou égale à seulement 5 cm,

le dit module (10) pouvant être mis en place de manière remplaçable derrière la dite lentille (20) pour assurer une illumination vers l'avant pour le dit véhicule.

2. Module d'éclairage (10) selon la revendication 1 caractérisé en ce que le dit réflecteur (12) et le dit couvercle (16) sont chacun réalisés dans un matériau plastique.

3. Module d'éclairage (10) selon la revendication 1 caractérisé en ce que la dite lampe halogène-tungstène (14) est une lampe comprise entre 10 et 25 Watts environ.

4. Module d'éclairage (10) selon la revendication 1 caractérisé en ce que le dit couvercle (16) est en verre.

5. Module d'éclairage (10) selon la revendication 1 incluant deux ouvertures (23) dans la dite paroi arrière du dit réflecteur (12), chacune des dites entrées de courant (29) de la dite lampe halogène-tungstène (14) étant positonnée respectivement dans une des dites ouvertures (23) et faisant saillie de l'arrière du dit réflecteur (12) pour être électriquement reliées à une source de puissance associée au dit véhicule à moteur.

6. Module d'éclairage (10) selon la revendication 5 caractérisé en ce que les dites entrées de courant (29) sont fixées au dit réflecteur (12) par soudage ultrasonique.

7. Module d'éclairage (10) selon la revendication 1 incluant un culot électriquement isolant (32), la dite lampe halogène-tungstène (42) étant fermement fixée à l'intérieur du dit culot (32), la dite paroi arrière du dit réflecteur (12) présentant une ouverture, le dit culot (32) étant scellé à l'intérieur de la dite ouverture.

8. Module d'éclairage (10) selon la revendication 1 caractérisé en ce que le dit réflecteur (12) présente une surface réfléchissante interne de forme substantiellement parabolique.

9. Système d'clairage pour un véhicule à moteur utilisant au moins un module d'éclairage (10) selon la revendication 1, incluant un élément lenticulaire (20) pour diriger la lumière émise par la dite lampe halogène-tungstène (14) à travers de dit couvercle transparent (16) pour fournir un champ de lumière déterminé à partir du dit véhicule automobile lorsqu'il est équipé du dit module.

10. Système d'éclairage selon la revendication 9 caractérisé en ce que le dit élément lenticulaire (20) est disposé à une certaine distance devant le dit couvercle transparent (16) et forme un angle avec le dit couvercle (16) compris entre 0 et 30' environ.

11. Système d'éclairage selon la revendication 9 caractérisé en ce que le dit élément lenticulaire (20) est substantiellement plan et comporte une surface lenticulaire sur l'un de ses côtés en regard du dit module (10).

12. Système d'éclairage selon la revendication 9 caractérisé en ce que le dit élément lenticulaire (20) présente une forme prévue pour substaniellement épouser la forme avant du dit véhicule à moteur.

Fig.1

Fig.2

Fig.3

Fig.4

HI/LOW SW.

LIGHT CONTROL

10A    10B    10C    10D

Fig.3A

1